(19) **Europäisches Patentamt**

**European Patent Office**

**Office européen des brevets**

(11) **EP 1 163 738 B1**

(12) **EUROPEAN PATENT SPECIFICATION**

(45) Date of publication and mention
of the grant of the patent:
**27.08.2003 Bulletin 2003/35**

(51) Int Cl.⁷: **H04B 7/005**

(86) International application number:
**PCT/US00/07477**

(21) Application number: **00921420.6**

(22) Date of filing: **22.03.2000**

(87) International publication number:
**WO 00/057575 (28.09.2000 Gazette 2000/39)**

(54) **WEIGHTED OPEN LOOP POWER CONTROL IN A TIME DIVISION DUPLEX COMMUNICATION SYSTEM**

LEISTUNGSREGELUNG MIT GEWICHTETER OFFENER SCHLEIFE IN EINEM ZEITDUPLEX-KOMMUNIKATIONSSYSTEM

COMMANDE EN BOUCLE OUVERTE PONDEREE INTEGREE DANS UN DUPLEX A REPARTITION DANS LE TEMPS D'UN SYSTEME DE COMMUNICATION

(84) Designated Contracting States:
**AT BE CH CY DE DK ES FI FR GB GR IE IT LI LU MC NL PT SE**

(30) Priority: **22.03.1999 US 125417 P**
**28.05.1999 US 136556 P**
**28.05.1999 US 136557 P**

(43) Date of publication of application:
**19.12.2001 Bulletin 2001/51**

(60) Divisional application:
**03013811.9**

(73) Proprietor: **INTERDIGITAL TECHNOLOGY CORPORATION**
**Wilmington, DE 19801 (US)**

(72) Inventors:
• **ZEIRA, Ariela**
**Trumball, CT 06611 (US)**
• **SHIN, Sung-Hyuk**
**Fort Lee, NJ 07024 (US)**

(74) Representative: **Henningsson, Gunnar et al**
**AWAPATENT AB,**
**Box 45086**
**104 30 Stockholm (SE)**

(56) References cited:
**EP-A- 0 462 952**   **EP-A- 0 610 030**
**WO-A-98/45962**   **US-A- 5 542 111**

**Description**

**BACKGROUND**

This invention generally relates to spread spectrum time division duplex (TDD) communication systems. More particularly, the present invention relates to a system and method for controlling transmission power within TDD communication systems.

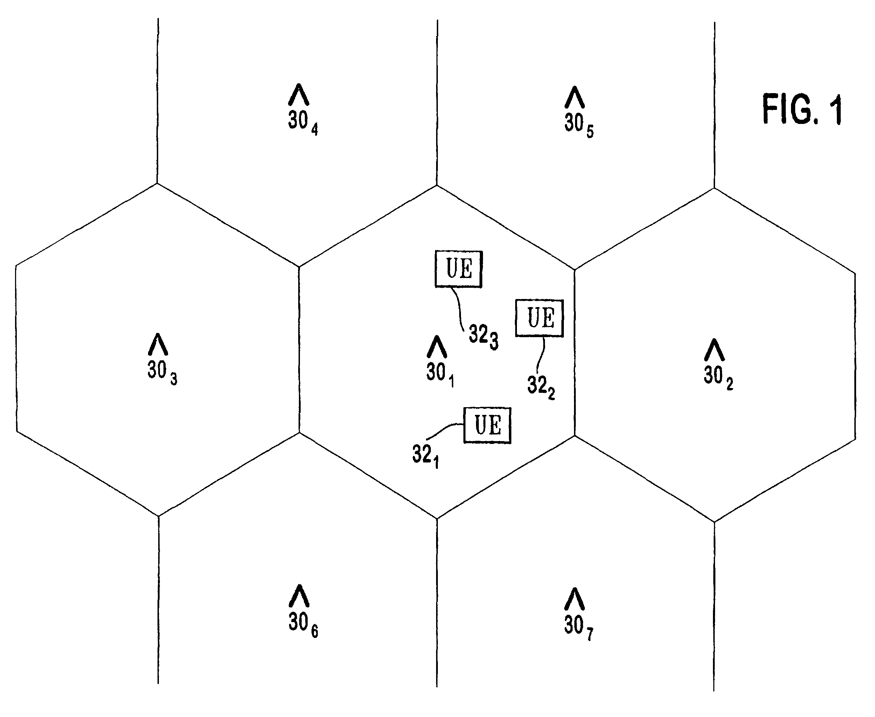

**Figure 1** depicts a wireless spread spectrum time division duplex (TDD) communication system. The system has a plurality of base stations $30_1$-$30_7$. Each base station $30_1$ communicates with user equipments (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

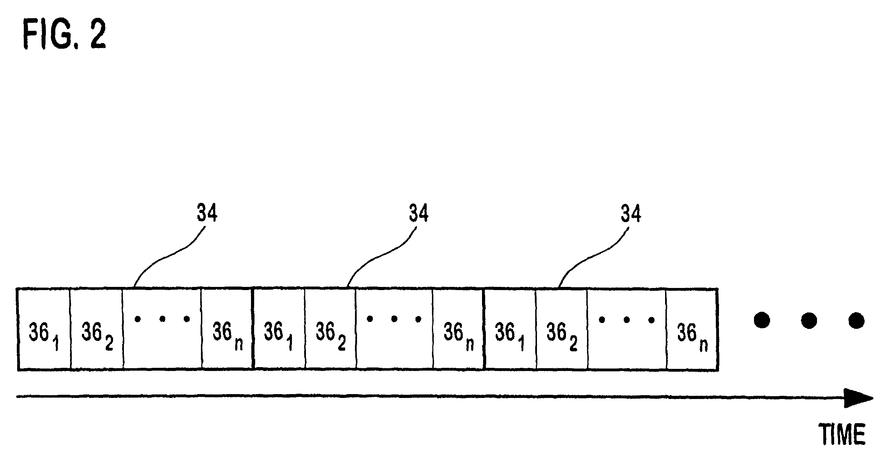

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as fifteen time slots. In such systems, a communication is sent in selected time slots $36_1$-$36_n$ using selected codes. Accordingly, one frame **34** is capable of carrying multiple communications distinguished by both time slot $36_1$-$36_n$ and code. The use of a single code in a single time slot is referred to as a resource unit. Based on the bandwidth required to support a communication, one or multiple resource units arc assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach using transmission power control in a code division multiple access (CDMA) communication system is described in U.S. Patent No. 5,056,109 (Gilhousen et al.). A transmitter sends a communication to a particular receiver. Upon reception, the received signal power is measured. The received signal power is compared to a desired received signal power. Based on the comparison, a control bit is sent to the transmitter either increasing or decreasing transmission power by a fixed amount. Since the receiver sends a control signal to the transmitter to control the transmitter's power level, such power control techniques are commonly referred to as closed loop.

Under certain conditions, the performance of closed loop systems degrades. For instance, if communications sent between a LIE $32_1$ and a base station $30_1$ are in a highly dynamic environment, such as due to the UE $32_1$ moving, such systems may not be able to adapt fast enough to compensate for the changes. The update rate of closed loop power control in a typical TDD system is 100 cycles per second which is not sufficient for fast fading channels.

EP-A-0 610 030 discloses a transmit power control system for use in a TDD/CDMA communication system. A radio telephone receives a communication in a reception time slot and measures its power level. Based on the reception power level, the transmit power level in a transmission time slot is controlled.

EP-A-0 462 952 discloses a method for regulating or adjusting transmission power for signals between a mobile station and a base station in a digital mobile telephony system. To determine the transmission power level, the mean values of the signal strength and signal transmission quality are determined. Based on the mean values, an anticipated signal strength and signal quality are calculated for a subsequent time period, assuming the transmission power is maintained unchanged. The transmission power level at the subsequent time period is adjusted based on the anticipated values.

WO-A-98 45962 discloses a method for controlling a transmission power level of a mobile terminal in a satellite communication system. The power control method has both a closed-loop and an open-loop element. For the closed-loop element, the base station calculates the mobile terminal's power setting based on the strength of the signals received from the mobile terminal. The base station takes into account the propagation delays of the satellite system in the power setting determination. For the open-loop element, the strength of the received signal from the base station in each frame is compared to the strength of the signal received in the previous frame. The transmit power of the mobile terminal is adjusted inversely with the variations in the observed signal strength. Accordingly, there is a need for alternate approaches to maintain signal quality and low transmission power levels.

**SUMMARY**

The present invention provides a method for controlling transmission power levels according to claim 1. The invention also provides a spread spectrum time division duplex communication system according to claim 8 and a communication station according to claim 15. Further aspects of the invention according to the dependent claims are also provided.

The invention controls transmission power levels in a spread spectrum time division duplex communication station. A first communication station transmits a communication to a second communication station. The second station receives the communication and measures its received power level. Based on, in part, the received communication's power level and the communication's transmission power level, a path loss estimate is determined. The transmission power level for a communication from the second station to the first station is set based on, in part, weighting the path loss estimate and a long term pathloss estimate.

## BRIEF DESCRIPTION OF THE DRAWINGS

**Figure 1** illustrates a prior art TDD system.
**Figure 2** illustrates time slots in repeating frames of a TDD system.
**Figure 3** is a flow chart of weighted open loop power control.
**Figure 4** is a diagram of components of two communication stations using weighted open loop power control.
**Figure 5** depicts a graph of the performance of a weighted open loop, open loop and closed loop power control system for a UE moving at 30 kilometers per hour (km/h).
**Figure 6** depicts a graph of the three systems' performance for a UE moving at 60 km/h.

## DETAILED DESCRIPTION OF THE PREFERRED EMBODIMENTS

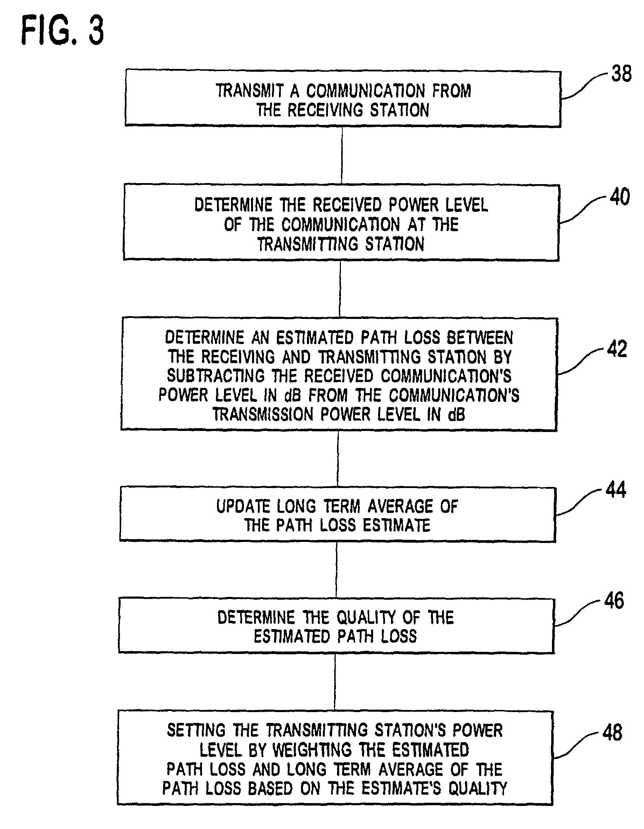

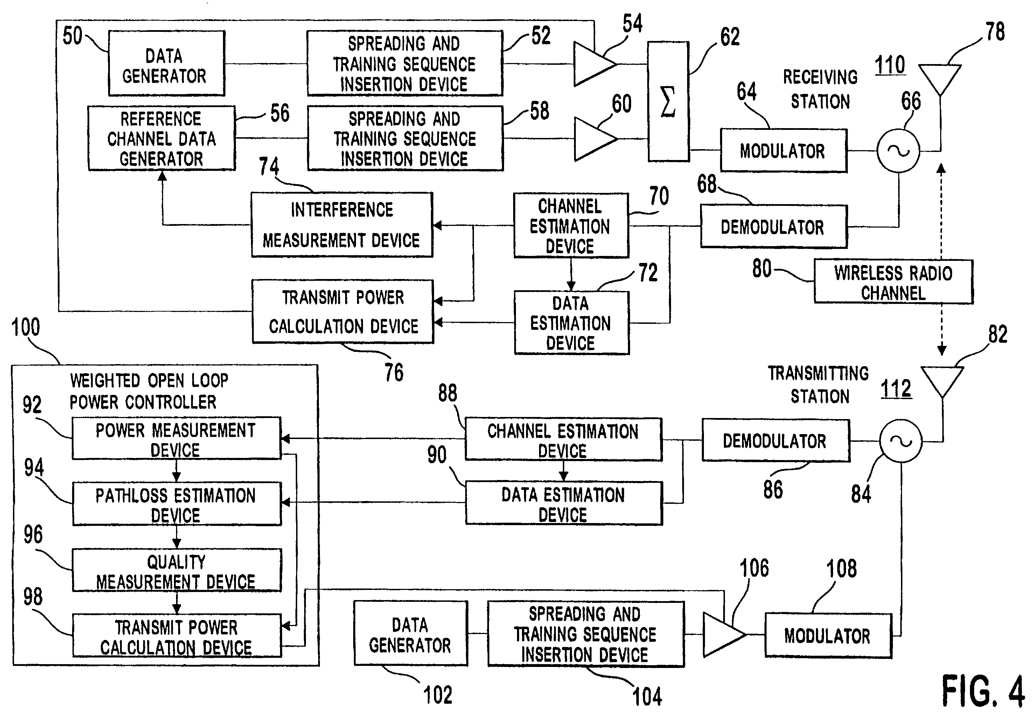

The preferred embodiments will be described with reference to the drawing figures where like numerals represent like elements throughout. Weighted open loop power control will be explained using the flow chart of **Figure 3** and the components of two simplified communication stations **110, 112** as shown in **Figure 4.** For the following discussion, the communication station having its transmitter's power controlled is referred to as the transmitting station **112** and the communication station receiving power controlled communications is referred to as the receiving station **110.** Since weighted open loop power control may be used for uplink, downlink or both types of communications, the transmitter having its power controlled may be located at a base station $30_1$, UE $32_1$ or both. Accordingly, if both uplink and downlink power control are used, the receiving and transmitting station's components are located at both the base station $30_1$ and UE $32_1$. For use in estimating the path loss between the receiving and transmitting stations **110, 112,** the receiving station **110** sends a communication to the transmitting station **112.** The communication may be sent on any one of various channels. Typically, in a TDD system, the channels used for estimating path loss are referred to as reference channels, although other channels may be used. If the receiving station **110** is a base station $30_1$, the communication is preferably sent over a downlink common channel or a Common Control Physical Channel (CCPCH).

Data to be communicated to the transmitting station **112** over the reference channel is referred to as reference channel data. The reference channel data is generated by a reference channel data generator **56.** The reference data is assigned one or multiple resource units based on the communication's bandwidth requirements. A spreading and training sequence insertion device **58** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **60.** The amplified communication burst may be summed by a sum device **62** with any other communication burst created through devices, such as a data generator **50,** spreading and training sequence insertion device **52** and amplifier **54.** The summed communication bursts are modulated by a modulator **64.** The modulated signal is passed through an isolator **66** and radiated by an antenna **78** as shown or, alternately, through an antenna array, step **38.** The radiated signal is passed through a wireless radio channel **80** to an antenna **82** of the transmitting station **112.** The type of modulation used for the transmitted communication can be any of the those known to those skilled in the art, such as direct phase shift keying (DPSK) or quadrature phase shift keying (QPSK).

The antenna **82** or, alternately, antenna array of the transmitting station **112** receives various radio frequency signals. The received signals are passed through an isolator **84** to a demodulator **86** to produce a baseband signal. The baseband signal is processed, such as by a channel estimation device **88** and a data estimation device **90,** in the time slots and with the appropriate codes assigned to the communication's burst. The channel estimation device **88** commonly uses the training sequence component in the baseband signal to provide channel information, such as channel impulse responses. The channel information is used by the data estimation device **90** and a power measurement device **92.** The power level of the processed communication corresponding to the reference channel, $R_{TS}$, is measured by the power measurement device **92** and sent to a pathloss estimation device **94, step 40.** The channel estimation device **88** is capable of separating the reference channel from all other channels. If an automatic gain control device or amplifier is used for processing the received signals, the measured power level is adjusted to correct for the gain of these devices at either the power measurement device **92** or the pathloss estimation device **94.**

To determine the path loss, L, the transmitting station **112** also requires the communication's transmitted power level, $T_{RS}$. The transmitted power level, $T_{RS}$, may be sent along with the communication's data or in a signaling channel. If the power level, $T_{RS}$, is sent along with the communication's data, the data estimation device **90** interprets the power level and sends the interpreted power level to the pathloss estimation device **94**. If the receiving station **110** is a base station **30₁**, preferably the transmitted power level, $T_{RS}$, is sent via the broadcast channel (BCH) from the base station **30₁**. By subtracting the received communication's power level, $R_{TS}$ in dB, from the sent communication's transmitted power level, $T_{RS}$ in dB, the pathloss estimation device **94** estimates the path loss, L, between the two stations **110, 112, step 42**. Additionally, a long term average of the pathloss, $L_0$, is updated, **step 44.** In certain situations, instead of transmitting the transmitted power level, $T_{RS}$, the receiving station **110** may transmit a reference for the transmitted power level. In that case, the pathloss estimation device **94** provides reference levels for the path loss, L, and the long term average of the path loss, $L_0$.

Since TDD systems transmit downlink and uplink communications in the same frequency spectrum, the conditions these communications experience are similar. This phenomenon is referred to as reciprocity. Due to reciprocity, the path loss experienced for the downlink will also be experienced for the uplink and vice versa. By adding the estimated path loss to a desired received power level, a transmission power level for a communication from the transmitting station **112** to the receiving station **110** is determined. This power control technique is referred to as open loop power control.

Open loop systems have drawbacks. If a time delay exists between the estimated path loss and the transmitted communication, the path loss experienced by the transmitted communication may differ from the calculated loss. In TDD where communications are sent in differing time slots $36_1$-$36_n$, the time slot delay between received and transmitted communications may degrade the performance of an open loop power control system. To overcome these drawbacks, a quality measurement device **96** in a weighted open loop power controller **100** determines the quality of the estimated path loss, **step 46.** The quality measurement device **96** also weights the estimated path loss, L, and long term average of the pathloss, $L_0$, to set the transmit power level by transmit power calculation device **98, step 48.** As illustrated in **Figure 4,** the weighted open loop power controller **100** consists of the power measurement device **92,** pathloss estimation device **94,** quality measurement device **96,** and transmit power calculation device **98.**

The following is one of the preferred weighted open loop power control algorithms. The transmitting station's power level in decibels, $P_{TS}$, is determined using **Equation 1.**

$$P_{TS} = P_{RS} + \alpha(L-L_0) + L_0 + \text{CONSTANT VALUE} \qquad \text{Equation 1}$$

$P_{RS}$ is the power level that the receiving station **110** desires to receive the transmitting station's communication in dB. $P_{RS}$ is determined by the desired SIR, **SIR**$_{TARGET}$, at the receiving station **110** and the interference level, $I_{RS}$, at the receiving station **110.**

To determine the interference level, $I_{RS}$, at the receiving station, received communications from the transmitting station **112** are demodulated by a demodulator **68**. The resulting baseband signal is processed, such as by a channel estimation device **70** and a data estimator device **72** in the time slots and with the appropriate codes assigned the transmitting station's communications. The channel information produced by the channel estimation device **70** is used by an interference measurement device **74** to determine the interference level, $I_{RS}$. The channel information may also be used to control the transmit power level of the receiving station **110**. The channel information is input to a data estimation device **72** and a transmit power calculation device **76.** The data estimation produced by the data estimation device **72** is used with the channel information by the transmit power calculation device **76** to control the amplifier **54** which controls the receiving station's transmit power level.

$P_{RS}$ is determined using **Equation 2.**

$$P_{RS} = \text{SIR}_{TARGET} + I_{RS} \qquad \text{Equation 2}$$

$I_{RS}$ is either signaled or broadcasted from the receiving station **110** to the transmitting station **112.** For downlink power control, SIR$_{TARGET}$ is known at the transmitting station **112.** For uplink power control, SIR$_{TARGET}$ is signaled from the receiving station **110** to the transmitting station **112.** Using **Equation 2, Equation 1** is rewritten as either **Equations 3** or **4.**

$$P_{TS} = SIR_{TARGET} + I_{RS} + \alpha(L-L_0) + L_0 + \text{CONSTANT VALUE} \qquad \text{Equation 3}$$

$$P_{TS} = \alpha L + (1-\alpha)L_0 + I_{RS} + SIR_{TARGET} + \text{CONSTANT VALUE} \qquad \text{Equation 4}$$

L is the path loss estimate in decibels, $T_{RS}$- $R_{TS}$, for the most recent time slot $36_1$-$36_n$ that the path loss was estimated. The long term average of the pathloss, $L_0$, is a running average of the path loss estimates L. The CONSTANT VALUE is a correction term. The CONSTANT VALUE corrects for differences in the uplink and downlink channels, such as to compensate for differences in uplink and downlink gain. Additionally, the CONSTANT VALUE may provide correction if the transmit power reference level of the receiving station is transmitted, instead of the actual transmit power, $T_{RS}$. If the receiving station is a base station $30_1$, the CONSTANT VALUE is preferably sent via Layer 3 signaling. If the receiving station is a base station $30_1$, the CONSTANT VALUE is preferably sent via Layer 3 signaling.

The weighting value, $\alpha$, determined by the quality measurement device **94,** is a measure of the quality of the estimated path loss and is, preferably, based on the number of time slots $36_1$-$36_n$ between the time slot, n, of the last path loss estimate and the first time slot of the communication transmitted by the transmitting station **112.** The value of $\alpha$ is from zero to one. Generally, if the time difference between the time slots is small, the recent path loss estimate will be fairly accurate and $\alpha$ is set at a value close to one. By contrast, if the time difference is large, the path loss estimate may not be accurate and the long term average path loss measurement is most likely a better estimate for the path loss. Accordingly, $\alpha$ is set at a value closer to zero.

**Equation 5** is one equation for determining $\alpha$, although others may be used.

$$\alpha = 1 - (D - 1)/D_{max} \qquad \text{Equation 5}$$

The value, D, is the number of time slots $36_1$-$36_n$ between the time slot of the last path loss estimate and the first time slot of the transmitted communication which will be referred to as the time slot delay. If the delay is one time slot, $\alpha$ is one. $D_{max}$ is the maximal possible delay. A typical value for a frame having fifteen time slots is six. If the delay is $D_{max}$ or greater, $\alpha$ approaches zero. Using the transmit power level, $P_{TS}$, determined by a transmit power calculation device **98,** the weighted open loop power controller **100** sets the transmit power of the transmitted communication, **step 48.**

Data to be transmitted in a communication from the transmitting station **112** is produced by a data generator **102.** The communication data is spread and time-multiplexed with a training sequence by the spreading and training sequence insertion device **104** in the appropriate time slots and codes of the assigned resource units. The spread signal is amplified by the amplifier **106** and modulated by the modulator **108** to radio frequency.

The weighted open loop power controller **100** controls the gain of the amplifier **106** to achieve the determined transmit power level, $P_{TS}$, for the communication. The communication is passed through the isolator **84** and radiated by the antenna **82.**

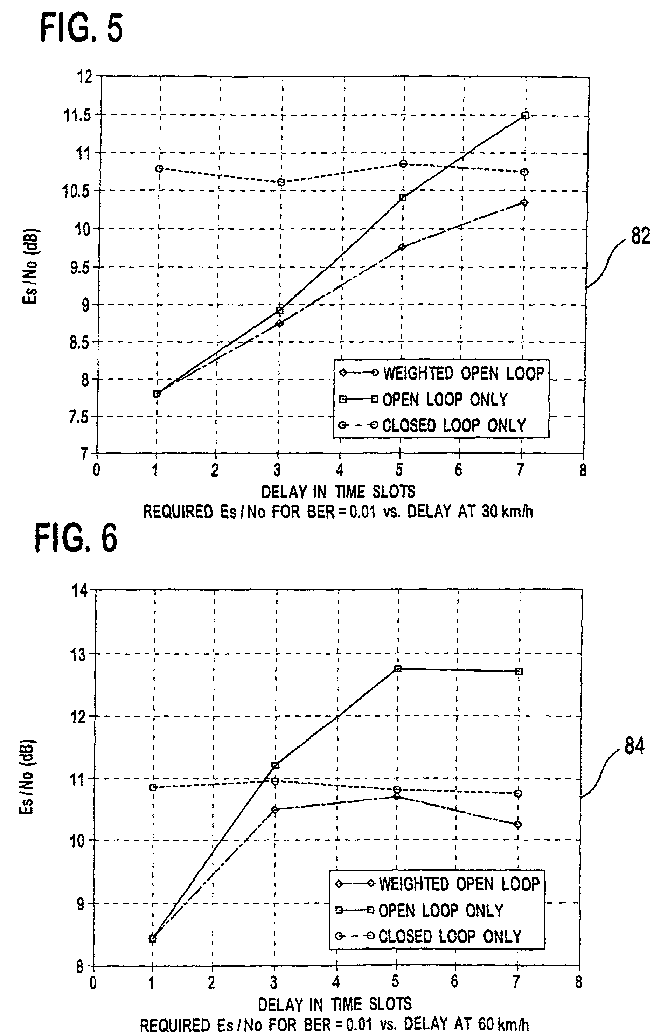

**Figures 5** and **6** depict graphs **82, 84** illustrating the performance of a weighted open loop system using **Equation 4. Equation 5** is used to calculate $\alpha$. These graphs **82, 84** depict the results of simulations comparing the performance of a weighted open loop, an open loop and a closed loop system controlling the transmission power level of the transmitting station **112.** The simulations address the performance of these systems in a fast fading channel under steady-state conditions. In this example, the receiving station is a base station $30_1$ and the transmitting station is a UE $32_1$. For the simulation, the UE $32_1$ was a mobile station. The simulated base station $30_1$ used two antenna diversity for reception with each antenna having a three finger RAKE receiver. The simulation approximated a realistic channel and SIR estimation based on a midamble sequence of burst type 1 field in the presence of additive white Gaussian noise (AWGN). The simulation used an International Telecommunication Union (ITU) Pedestrian B type channel and QPSK modulation. Interference levels were assumed to be accurately known with no uncertainty. Channel coding schemes were not considered. The CONSTANT VALUE and $L_0$ were set at 0 db.

For each of the power control techniques, **Figure 5,** graph **82** shows the energy for a transmitted complex symbol in decibels (Es/No) required to maintain a BER of 1% for various time slot delays, D, with the UE $32_1$ moving at 30 kilometers per hour (km/h). As shown, at lower time slot delays, both weighted open loop and open loop outperform closed loop. For higher time slot delays, weighted open loop outperforms both open loop and closed loop. As shown in **Figure 6**, graph **84,** similar results occur if the UE $32_1$ is traveling at 60 km/h.

## Claims

1. A method for controlling transmission power levels in a spread spectrum time division duplex communication system having frames with time slots for communication, wherein a first communication station transmits a first communication having a transmission power level in a first time slot (38), a second communication station receives the first communication and measures a power level of the first communication as received (40), a path loss estimate is determined based on in part the measured received first communication power level and the first communication transmission power level, the method
**characterized by**:

setting a transmission power level for a second communication in a second time slot from the second station to the first station based on in part combining the path loss estimate weighted by a first factor with a long term path loss estimate weighted by a second factor (48), wherein the first and second factors are a function of a time separation of the first and second time slots.

2. The method of claim 1 further **characterized by**:

determining the long term path loss estimate based at least in part upon an average of path loss estimates of communications sent from the first station to the second station (42, 44).

3. The method of claim 1 further **characterized by**:

determining a quality, $\alpha$, of the pathloss estimate based on in part a number of time slots, D, between the first and second time slot (46); and
wherein the first factor is $\alpha$ and the second factor is 1-$\alpha$.

4. The method of claim 3 **characterized in that** a maximum time slot delay is $D_{max}$ and the determined quality, $\alpha$, is determined by

$$\alpha=1-(D-1)/D_{max}.$$

5. The method of claim 1 **characterized in that** the set transmission power level compensates for differences in the uplink and downlink gains.

6. The method of claim 1 **characterized in that** the first station is a base station and the second station is a user equipment.

7. The method of claim 1 **characterized in that** the first station is a user equipment and the second station is a base station.

8. A spread spectrum time division duplex communication system having a first (110) and second (112) communication station, the system using frames with time slots for communication, a first communication having a transmit power level in a first time slot is transmitted from the first station (110), the second station (112) receiving the first communication and measuring a power level of the first communication as received, a path loss estimate is determined based on in part the measured received first communication power level and the first communication transmission power level and comprising means (106) for transmitting a second communication in a second time slot at a set transmission power level, the system **characterized by**:

the second station (112) further comprising:

means (100) for setting the transmission power level for the second communication in the second time slot based on in part combining the path loss estimate weighted by a first factor with a long term path loss estimate weighted by a second factor, wherein the first and second factors are a function of a time separation of the first and second time slots.

9. The system of claim 8, **characterized in that** the second station (112) further comprises:

means (94) for determining the long term path loss estimate based at least in part upon an average of path loss estimates of communications sent from the first station to the second station.

**10.** The system of claim 8, **characterized in that** the first station (110) further comprises:

means (96) for determining a quality, $\alpha$, of the pathloss estimate based on in part a number of time slots, D, between the first and second time slot; and

wherein the first factor is $\alpha$ and the second factor is 1-$\alpha$.

**11.** The system of claim 10 **characterized in that** a maximum time slot delay is $D_{max}$ and the determined quality, $\alpha$, is determined by

$$\alpha=1-(D-1)/D_{max}.$$

**12.** The system of claim 8, **characterized in that** the setting means (100) sets the transmission power level to compensate for differences in the uplink and downlink gains.

**13.** The system of claim 8, **characterized in that** the first station (110) is a base station (30) and the second station (112) is a user equipment (32).

**14.** The system of claim 8, **characterized in that** the first station (110) is a user equipment (32) and the second station (112) is a base station (30).

**15.** A communication station (112) having its transmission power level controlled in a spread spectrum time division duplex communication system, the system using frames with time slots for communication and having a second communication station (110) transmitting a first communication in a first time slot, the communication station comprising at least one antenna (82) for receiving the first communication and transmitting an amplified second communication in a second time slot, a channel estimation device (88) having an input configured to receive the received first communication for producing channel information, a data estimation device (90) having inputs configured to receive the received first communication and the channel information for producing interpreted data, a power measurement device (92) having an input configured to receive the channel information for producing a measurement of a received power level of the first communication, a path loss estimation device (94) having an input configured to receive the measured received power level and comparing the measured received power level to a transmission power level of the first communication for producing a path loss estimate for the first communication, and an amplifier (106) having inputs configured to receive a power control signal and a second communication to be transmitted in the second time slot for amplifying the second communication in response to the power control signal to produce the amplified second communication, the communication station (112) **characterized by**:

a quality measurement device (96) for producing a quality measurement based at least in part upon a time separation of the first time slot and the second time slot; and
a transmit power calculation device (98) having inputs configured to receive the pathloss estimation and the quality measurement for producing the power control signal based at least in part upon combining the path loss estimate weighted by a first factor and a long term pathloss estimate weighted by a second factor, wherein the first and second factors are based on in part the quality measurement.

**16.** The communication station (112) of claim 15 further **characterized by**:

a data generator (102) for producing communication data;
a spreading and training sequence insertion device (104) having an input configured to receive the communication data for producing the second communication in the second time slot; and
a modulator (108) having an input configured to receive the amplified second communication for modulating the amplified second communication to radio frequency prior to transmission.

**17.** The communication station (112) of claim 15 further **characterized by**:

a demodulator (86) having an input configured to receive the received first communication for producing a baseband signal; and

wherein both the channel estimation device and the data estimation device have an input configured to receive the baseband signal.

**18.** The communication station (112) of claim 15, **characterized in that** the quality measurement is in the range of zero to one and the first factor is the quality measurement and the second factor is one minus the quality measurement.

**19.** The communication station (112) of claim 15, **characterized in that** the communication station (112) is a base station (30) and the second station (110) is a user equipment (32).

**20.** The communication station of claim 15, **characterized in that** the communication station (112) is a user equipment (32) and the second station (110) is a base station (30).

**Patentansprüche**

**1.** Verfahren zum Regeln von Sendeleistungspegeln in einem Spread-Spectrum-Zeitduplex-Kommunikationssystem mit Rahmen, die Zeitschlitze für Kommunikationen aufweisen,
wobei eine erste Kommunikationsstation eine erste Kommunikation mit einem Sendeleistungspegel in einem ersten Zeitschlitz (38) überträgt und eine zweite Kommunikationsstation die erste Kommunikation empfängt und einen Empfangsleistungspegel der ersten Kommunikation mißt (40), wobei ein Pfadverlust-Schätzwert basierend teilweise auf dem gemessenen Empfangsleistungspegel der ersten Kommunikation und dem Sendeleistungspegel der ersten Kommunikation bestimmt wird, wobei das Verfahren **gekennzeichnet ist durch** die Schritte:

Setzen eines Sendeleistungspegels für eine zweite Kommunikation in einem zweiten Zeitschlitz von der zweiten Station zur ersten Station basierend teilweise auf einer Kombination aus dem Pfadverlust-Schätzwert, der mit einem ersten Faktor gewichtet wird, und einem Langzeit-Pfadverlust-Schätzwert, der mit einem zweiten Faktor gewichtet wird (48), wobei der erste und der zweite Faktor Funktionen einer zeitlichen Trennung des ersten und des zweiten Zeitschlitzes sind.

**2.** Verfahren nach Anspruch 1, ferner **gekennzeichnet durch**:

Bestimmen des Langzeit-Pfadverlust-Schätzwertes basierend mindestens teilweise auf einem Mittelwert von Pfadverlust-Schätzwerten von von der ersten Station zur zweiten Station übertragenen Kommunikationen (42, 44).

**3.** Verfahren nach Anspruch 1, ferner **gekennzeichnet durch**:

Bestimmen einer Qualität $\alpha$ des Pfadverlust-Schätzwertes basierend teilweise auf einer Anzahl D von Zeitschlitzen zwischen dem ersten und dem zweiten Zeitschlitz (46);

wobei der erste Faktor $\alpha$ und der zweite Faktor $1 - \alpha$ ist.

**4.** Verfahren nach Anspruch 3, **dadurch gekennzeichnet, daß** eine maximale Zeitschlitzverzögerung $D_{max}$ beträgt und die bestimmte Qualität $\alpha$ bestimmt wird durch:

$$\alpha = 1 - (D-1)/D_{max}.$$

**5.** Verfahren nach Anspruch 1, **dadurch gekennzeichnet, daß** der gesetzte Sendeleistungspegel Differenzen in Uplinkund Downlink-Verstärkungen kompensiert.

**6.** Verfahren nach Anspruch 1, **dadurch gekennzeichnet, daß** die erste Station eine Basisstation und die zweite Station ein User Equipment ist.

**7.** Verfahren nach Anspruch 1, **dadurch gekennzeichnet, daß** die erste Station ein User Equipment und die zweite Station eine Basisstation ist.

**8.** Spread-Spectrum-Zeitduplex-Kommunikationssystem mit einer ersten (110) und einer zweiten (112) Kommunikationsstation, wobei das System Rahmen mit Zeitschlitzen für Kommunikationen verwendet, wobei eine erste Kommunikation mit einem Sendeleistungspegel in einem ersten Zeitschlitz von der ersten Station (110) übertragen wird, die zweite Station (112) die erste Kommunikation empfängt und einen Empfangsleistungspegel der ersten Kommunikation mißt, ein Pfadverlust-Schätzwert basierend teilweise auf dem gemessenen Empfangsleistungspegel der ersten Kommunikation und dem Sendeleistungspegel der ersten Kommunikation bestimmt wird, und wobei das System eine Einrichtung (106) zum Übertragen einer zweiten Kommunikation in einem zweiten Zeitschlitz mit einem gesetzten Sendeleistungspegel aufweist;

wobei das System **dadurch gekennzeichnet ist, daß** die zweite Station (112) ferner aufweist:

eine Einrichtung (100) zum Setzen des Sendeleistungspegels für die zweite Kommunikation im zweiten Zeitschlitz basierend teilweise auf einer Kombination aus dem Pfadverlust-Schätzwert, der mit einem ersten Faktor gewichtet wird, und einem Langzeit-Pfadverlust-Schätzwert, der mit einem zweiten Faktor gewichtet wird, wobei der erste und der zweite Faktor Funktionen einer zeitlichen Trennung des ersten und des zweiten Zeitschlitzes sind.

9. System nach Anspruch 8, **dadurch gekennzeichnet, daß** die zweite Station (112) ferner aufweist:

eine Einrichtung (94) zum Bestimmen des Langzeit-Pfadverlust-Schätzwertes basierend mindestens teilweise auf einem Mittelwert von Pfadverlust-Schätzwerten von von der ersten Station zur zweiten Station übertragenen Kommunikationen.

10. System nach Anspruch 8, **dadurch gekennzeichnet, daß** die erste Station (110) ferner aufweist:

eine Einrichtung (96) zum Bestimmen einer Qualität $\alpha$ des Pfadverlust-Schätzwertes basierend teilweise auf einer Anzahl D von Zeitschlitzen zwischen dem ersten und dem zweiten Zeitschlitz ;

wobei der erste Faktor $\alpha$ und der zweite Faktor $1 - \alpha$ ist.

11. System nach Anspruch 10, **dadurch gekennzeichnet, daß** eine maximale Zeitschlitzverzögerung $D_{max}$ beträgt und die bestimmte Qualität $\alpha$ bestimmt wird durch:

$$\alpha = 1-(D-1)/D_{max}.$$

12. System nach Anspruch 8, **dadurch gekennzeichnet, daß** die Setzeinrichtung (100) den Sendeleistungspegel setzt, um Differenzen in Uplink- und Downlink-Verstärkungen zu kompensieren.

13. System nach Anspruch 8, **dadurch gekennzeichnet, daß** die erste Station (110) eine Basisstation (30) und die zweite Station (112) ein User Equipment (32) ist.

14. System nach Anspruch 8, **dadurch gekennzeichnet, daß** die erste Station (110) ein User Equipment (32) und die zweite Station (112) eine Basisstation (30) ist.

15. Kommunikationsstation (112), deren Sendeleistungspegel in einem Spread-Spectrum-Zeitduplex-Kommunikationssystem geregelt wird, wobei das System Rahmen mit Zeitschlitzen für Kommunikationen verwendet und eine zweite Kommunikationsstation (110) zum Übertragen einer ersten Kommunikation in einem ersten Zeitschlitz aufweist, wobei die Kommunikationsstation aufweist: mindestens eine Antenne (82) zum Empfangen der ersten Kommunikation und. zum Übertragen einer verstärkten zweiten Kommunikation in einem zweiten Zeitschlitz, eine Kanalschätzeinrichtung (88) mit einem Eingang, der so konfiguriert ist, daß die empfangene erste Kommunikation empfangen wird, zum Erzeugen von Kanalinformation, eine Datenschätzeinrichtung (90) mit Eingängen, die so konfiguriert sind, daß die empfangene erste Kommunikation und Kanalinformation empfangen wird, zum Erzeugen interpretierter Daten, eine Leistungsmeßeinrichtung (92) mit einem Eingang, der so konfiguriert ist, daß die Kanalinformation empfangen wird, zum Erzeugen eines Meßwertes eines Empfangsleistungspegels der ersten Kommunikation, eine Pfadverlustschätzeinrichtung (94) mit einem Eingang, der so konfiguriert ist, daß der gemessene Empfangsleistungspegel empfangen wird, wobei die Pfadverlustschätzeinrichtung den gemessenen Empfangsleistungspegel mit einem Sendeleistungspegel der ersten Kommunikation vergleicht, um einen Pfadverlust-Schätzwert für die erste Kommunikation zu erzeugen, und einen Verstärker (106) mit Eingängen, die so konfiguriert sind, daß ein Leistungsregelungssignal und eine im zweiten Zeitschlitz zu übertragende zweite Kommunikation empfangen werden, zum Verstärken der zweiten Kommunikation in Antwort auf das Leistungsregelungssignal und zum Erzeugen der verstärkten zweiten Kommunikation;

wobei die Kommunikationsstation (112) **gekennzeichnet ist durch**:

eine Qualitätsmeßeinrichtung (96) zum Erzeugen eines Qualitätsmeßwertes basierend mindestens teilweise auf einer zeitlichen Trennung des ersten Zeitschlitzes und des zweiten Zeitschlitzes; und

eine Sendeleistungsberechnungseinrichtung (98) mit Eingängen, die so konfiguriert sind, daß der Pfadverlust-Schätzwert und der Qualitätsmeßwert empfangen werden, zum Erzeugen des Leistungsregelungssignals basierend mindestens teilweise auf einer Kombination aus dem Pfadverlust-Schätzwert, der mit einem ersten Faktor gewichtet wird, und einem Langzeit-Pfadverlust-Schätzwert, der mit einem zweiten Faktor gewichtet wird, wobei der erste und der zweite Faktor teilweise auf dem Qualitätsmeßwert basieren.

16. Kommunikationsstation (112) nach Anspruch 15, ferner **gekennzeichnet durch**:

einen Datengenerator (102) zum Erzeugen von Kommunikationsdaten;

eine Spreiz- und Trainingssequenzeinfügungseinrichtung (104) mit einem Eingang, der so konfiguriert ist, daß die Kommunikationsdaten empfangen werden, zum Erzeugen der zweiten Kommunikation im zweiten Zeitschlitz; und

einem Modulator (108) mit einem Eingang, der so konfiguriert ist, daß die verstärkte zweite Kommunikation empfangen wird, zum Modulieren der verstärkten zweiten Kommunikation vor der Übertragung in eine Hochfrequenz.

17. Kommunikationsstation (112) nach Anspruch 15, ferner **gekennzeichnet durch**:

einen Demodulator (86) mit einem Eingang, der so moduliert ist, daß die empfangene erste Kommunikation empfangen wird, zum Erzeugen eines Basisbandsignals;

wobei sowohl die Kanalschätzeinrichtung als auch die Datenschätzeinrichtung einen Eingang aufweisen, der so konfiguriert ist, daß das Basisbandsignal empfangen wird.

18. Kommunikationsstation (112) nach Anspruch 15, **dadurch gekennzeichnet, daß** der Qualitätsmeßwert im Bereich von null bis eins liegt.und der erste Faktor den Qualitätsmeßwert darstellt und der zweite Faktor durch eins minus dem Qualitätsmeßwert gegeben ist.

19. Kommunikationsstation (112) nach Anspruch 15, **dadurch gekennzeichnet, daß** die Kommunikationsstation (112) eine Basisstation (30) und die zweite Station (110) ein User Equipment (32) ist.

20. Kommunikationsstation nach Anspruch 15, **dadurch gekennzeichnet, daß** die Kommunikationsstation (112) ein User Equipment (32) und die zweite Station (110) eine Basisstation (30) ist.

## Revendications

1. Procédé de commande de niveaux de puissance d'émission dans un système de communication duplex à répartition dans le temps à étalement du spectre présentant des trames avec des intervalles de temps pour la communication, procédé dans lequel une première station de communication émet une première communication présentant un niveau de puissance d'émission dans un premier intervalle de temps (38), une seconde station de communication reçoit la première communication et mesure un niveau de puissance de la première communication telle qu'elle est reçue (40), une estimation de l'affaiblissement de propagation est déterminée en se basant en partie sur le niveau de puissance de la première communication reçue mesurée et sur le niveau de puissance d'émission de la première communication ; **caractérisé :**

**en ce qu'**on établit un niveau de puissance d'émission pour une seconde communication dans un second intervalle de temps à partir de la seconde station vers la première station en se basant en partie sur la combinaison de l'estimation de l'affaiblissement de propagation pondérée par un premier facteur avec une estimation d'affaiblissement de propagation à long terme pondérée par un second facteur (48), dans lequel les premier et second facteurs sont fonction d'une séparation dans le temps des premier et second intervalles de temps.

**2.** Procédé selon la revendication 1, **caractérisé en ce que**, en outre, on détermine l'estimation d'affaiblissement de propagation à long terme en se basant au moins en partie sur une moyenne d'estimations d'affaiblissement de propagation des communications envoyées à partir de la première station à la seconde station (42, 44).

**3.** Procédé selon la revendication 1, **caractérisé en ce que**, en outre, on détermine une qualité, $\alpha$, de l'estimation d'affaiblissement de propagation en se basant en partie sur un nombre d'intervalles de temps, D, entre les premier et second intervalles de temps (46) ; et
dans lequel le premier facteur est $\alpha$ et le second facteur est $1-\alpha$.

**4.** Procédé selon la revendication 3, **caractérisé en ce qu'**un temps d'attente d'intervalle de temps maximal est $D_{max}$ et la qualité déterminée, $\alpha$, est déterminée par

$$\alpha = 1 - (D-1)/D_{max}.$$

**5.** Procédé selon la revendication 1, **caractérisé en ce que** le niveau de puissance d'émission établi compense les différences entre les gains de la liaison montante et de la liaison descendante.

**6.** Procédé selon la revendication 1, **caractérisé en ce que** la première station est une station de base et la seconde station est un équipement d'utilisateur.

**7.** Procédé selon la revendication 1, **caractérisé en ce que** la première station est un équipement d'utilisateur et la seconde station est une station de base.

**8.** Système de communication duplex à répartition dans le temps à étalement du spectre présentant une première (110) et une seconde (112) stations de communication, le système utilisant des trames avec des intervalles de temps pour la communication, dans lequel une première communication présentant un niveau de puissance d'émission dans un premier intervalle de temps (110) est transmise à partir de la première station (110), la seconde station (112) recevant la première communication et mesurant un niveau de puissance de la première communication telle qu'elle est reçue, une estimation d'affaiblissement de propagation est déterminé en se basant en partie sur le niveau de puissance de la première communication reçue mesurée et sur le niveau de puissance d'émission de la première communication, et comprenant des moyens (106) pour émettre une seconde communication dans un second intervalle de temps à un niveau de puissance d'émission établi, le système étant **caractérisé en ce que** :

la seconde station (112) comprend en outre des moyens (100) pour établir le niveau de puissance d'émission pour la seconde communication dans le second intervalle de temps en se basant en partie sur la combinaison de l'estimation d'affaiblissement de propagation pondérée par un premier facteur avec une estimation d'affaiblissement de propagation à long terme pondérée par un second facteur, où les premier et second facteurs sont fonction d'une séparation dans le temps des premier et second intervalles de temps.

**9.** Système selon la revendication 8, **caractérisé en ce que** la seconde station (112) comprend en outre :

des moyens (94) pour déterminer l'estimation d'affaiblissement de propagation à long terme en se basant au moins en partie sur une moyenne d'estimations d'affaiblissement de propagation de communications envoyées à partir de la première station à la seconde station.

**10.** Système selon la revendication 8, **caractérisé en ce que** la première station (110) comprend en outre :

des moyens (96) pour déterminer une qualité, $\alpha$, de l'estimation d'affaiblissement de propagation en se basant en partie sur un nombre d'intervalles dans le temps, D, entre le premier et le second intervalles de temps ; et

dans lequel le premier facteur est $\alpha$ et le second facteur est $1-\alpha$.

**11.** Système selon la revendication 10, **caractérisé en ce que** un temps d'attente d'intervalle de temps maximal est $D_{max}$ et la qualité déterminée, $\alpha$, est déterminée par :

$$\alpha = 1 - (D-1) / D_{max}.$$

**12.** Système selon la revendication 8, **caractérisé en ce que** le moyen d'établissement (100) établit le niveau de puissance d'émission pour compenser les différences entre les gains de la liaison montante et de la liaison descendante.

**13.** Système selon la revendication 8, **caractérisé en ce que** la première station (110) est une station de base (30) et la seconde station (112) est un équipement d'utilisateur (32).

**14.** Système selon la revendication 8, **caractérisé en ce que** la première station (110) est un équipement d'utilisateur (32) et la seconde station (112) est une station de base (30).

**15.** Station de communication (112) présentant un niveau de puissance d'émission commandé dans un système de communication duplex à répartition dans le temps à étalement du spectre, le système utilisant des trames avec des intervalles de temps pour la communication et présentant une seconde station de communication (110) émettant une première communication dans un premier intervalle de temps, la station de communication comprenant au moins une antenne (82) pour recevoir la première communication et émettre une seconde communication amplifiée dans un second intervalle de temps, un dispositif d'estimation de canal (88) présentant une entrée configurée de façon à recevoir la première communication reçue afin de produire des informations de canal, un dispositif d'estimation de données (90) présentant des entrées configurées de façon à recevoir la première communication reçue et les informations de canal afin de produire des données interprétées, un dispositif de mesure de puissance (92) présentant une entrée configurée de façon à recevoir les informations de canal afin de produire une mesure d'un niveau de puissance reçu de la première communication, un dispositif d'estimation d'affaiblissement de propagation (94) présentant une entrée configurée de façon à recevoir le niveau de puissance reçu mesuré et comparer le niveau de puissance reçu mesuré à un niveau de puissance émis de la première communication afin de produire une estimation d'affaiblissement de propagation pour la première communication, et un amplificateur (106) présentant des entrées configurées de façon à recevoir un signal de commande de puissance et une seconde communication à émettre dans le second intervalle de temps pour amplifier la seconde communication en réponse au signal de commande de puissance afin de produire la seconde communication amplifiée, la station de communication (112) étant **caractérisée par** :

un dispositif de mesure de qualité (96) afin de produire une mesure de qualité en se basant au moins en partie sur une séparation dans le temps du premier intervalle de temps et du second intervalle de temps ; et

un dispositif de calcul de puissance d'émission (98) présentant des entrées configurées de façon à recevoir L'estimation d'affaiblissement de propagation et la mesure de qualité afin de produire le signal de commande de puissance en se basant au moins en partie sur la combinaison de l'estimation d'affaiblissement de propagation pondérée par un premier facteur et d'une estimation d'affaiblissement de propagation à long terme pondérée par un second facteur, dans lequel les premier et second facteurs sont basés en partie sur la mesure de qualité.

**16.** Station de communication (112) selon la revendication 15, **caractérisée en outre par** :

un générateur de données (102) pour produire des données de communication ;

un dispositif d'insertion de séquence d'apprentissage et d'étalement (104) présentant une entrée configurée de façon à recevoir les données de communication pour produire la seconde communication dans le second intervalle de temps ; et

un modulateur (108) présentant une entrée configurée de façon à recevoir la seconde communication amplifiée afin de moduler la seconde communication amplifiée à la fréquence radioélectrique avant l'émission.

**17.** Station de communication (112) selon la revendication 15, **caractérisée en outre par** :

un démodulateur (86) présentant une entrée configurée de façon à recevoir la première communication reçue afin de produire un signal en bande de base ; et

dans laquelle à la fois le dispositif d'estimation de canal et le dispositif d'estimation de données présentent une entrée configurée de façon à recevoir le signal en bande de base.

**18.** Station de communication (112) selon la revendication 15, **caractérisée en ce que** la mesure de qualité est comprise entre zéro et un et le premier facteur est la mesure de qualité et le second facteur est un moins la mesure de qualité.

**19.** Station de communication (112) selon la revendication 15, **caractérisée en ce que** la station (112) est une station de base (30) et la seconde station (110) est un équipement d'utilisateur (32).

**20.** Station de communication selon la revendication 15, **caractérisée en ce que** la station de communication (112) est un équipement d'utilisateur (32) et la seconde station (110) est une station de base (30).

FIG. 1

FIG. 2

# FIG. 3

TRANSMIT A COMMUNICATION FROM
THE RECEIVING STATION — 38

DETERMINE THE RECEIVED POWER LEVEL
OF THE COMMUNICATION AT THE
TRANSMITTING STATION — 40

DETERMINE AN ESTIMATED PATH LOSS BETWEEN
THE RECEIVING AND TRANSMITTING STATION BY
SUBTRACTING THE RECEIVED COMMUNICATION'S
POWER LEVEL IN dB FROM THE COMMUNICATION'S
TRANSMISSION POWER LEVEL IN dB — 42

UPDATE LONG TERM AVERAGE OF
THE PATH LOSS ESTIMATE — 44

DETERMINE THE QUALITY OF THE
ESTIMATED PATH LOSS — 46

SETTING THE TRANSMITTING STATION'S POWER
LEVEL BY WEIGHTING THE ESTIMATED
PATH LOSS AND LONG TERM AVERAGE OF THE
PATH LOSS BASED ON THE ESTIMATE'S QUALITY — 48

FIG. 4

## FIG. 5

REQUIRED Es/No FOR BER=0.01 vs. DELAY AT 30 km/h

## FIG. 6

REQUIRED Es/No FOR BER=0.01 vs. DELAY AT 60 km/h